# EUROPEAN PATENT SPECIFICATION

(11) **EP 1 858 251 B1**
(45) Date of publication and mention of the grant of the patent: **19.01.2011**
(21) Application number: 07108331.5
(22) Date of filing: 16.05.2007
(51) Int. Cl.: H04N 5/232, G03B 37/04

(54) **Method of taking a panoramic photo and and mobile communication terminal using it**
Verfahren zum Aufnehmen eines Panoramafotos und mobiles Kommunikationsendgerät zur dessen Durchführung
Procédé pour prendre une photographie panoramique et terminal de communication mobile l'utilisant

(30) Priority: 17.05.2006 KR 20060044426
(43) Date of publication of application: 21.11.2007
(73) Proprietor: Samsung Electronics Co., Ltd., Suwon-si, Gyeonggi-do (KR)
(72) Inventor: Park, Kyoung-Ju, c/o Samsung Electronics Co., Ltd., Gyeonggi-do (KR); Cho, Sung-Dae, c/o Samsung Electronics Co., Ltd., Gyeonggi-do (KR)
(74) Representative: Grünecker, Kinkeldey, Stockmair & Schwanhäusser Anwaltssozietät

(56) References cited:
- US-A- 5 940 641
- US-A1- 2004 189 849
- ANONYMOUS: "Canon Digital Camera User Guide Powershot S500 et al." [Online] 2004, CANON INC. JP , JAPAN , XP002450078 Retrieved from the Internet: URL:http://www.usa.canon.com/consumer/cont roller?act=ModelInfoAct&tabact=DownloadDet ailTabAct&fcategoryid=322&modelid=9825> [retrieved on 2007-09-07] * pages 67-69 *

## Description

The present invention relates to digital image photography that may be incorporated in various hybrid apparatuses such as a mobile communication terminal having a digital camera module, and more particularly to a method for taking a panoramic photo.

Conventionally, a digital photographing unit is capable of obtaining an image of a scene formed in the focal distance of a lens. The acquired image exists within the range of the angle of view (in a general camera, about 30 to 50 deg.) which is narrower than the range of the viewing angle of a person looking at the same scene.

There is a technique referred to as a panorama photo-taking scheme for respectively photographing a plurality of scenes while changing only a photographing angle little by little. The acquired images are then sequentially interconnected to create a single image. The resulting image has an angle of view similar to or larger than that of the viewing angle of a person.

Conventionally, in a panorama photo-taking mode, a digital image photographing apparatus photographs a plurality of scenes such that they are continued in a horizontal or vertical direction. These digital images are stored in a memory. Then, the stored images are properly provided to internal/external image processors and a single image is then generated. In order to remove any differences in color tones and deviations of images occurring in boundaries among the scenes, several scenes are photographed such that boundaries of the scenes are properly overlapped. Image processing operations such as aligning, stitching and blending are then performed for the images of the overlapped boundaries. As a result, a single image in which several scenes are seamlessly interconnected is generated.

An important thing to be considered for such panorama photo-taking is first to photograph scenes such that they are maximally and accurately aligned. To this end, in addition to a basic scheme in which a user manually photographs an object by using a subsidiary apparatus such as a tripod, a method has also been proposed, in which a corresponding photographing apparatus is mounted on a tripod, etc., and the mounted photographing apparatus is rotated according to each scene photographing in panoramic photographing.

Further, a method has also been provided in order to allow scenes to be aligned more smoothly in panorama photo-taking without using the subsidiary apparatus, in which the partial edge of a previously photographed image is displayed so as to be properly overlap with an image to be currently photographed, so that a user can properly adjust a photographing position by matching the previously photographed image with the image to be currently photographed. Such technology includes US publication No. 2004-0189849 entitled "PANORAMIC SEQUENCE GUIDE" (inventor: Gregory V. Hofer, application date: March 3, 2003).

However, even with these methods less than perfect alignments may occur.

US 2004/0189849 A1 and the Canon Camera User Guide for the Powershot S500 Digital Camera, pages 67 to 69, both relate to a method for taking a panoramic photo and disclose the steps of measuring at least one photographic parameter. Such a parameter is, for instance, the distance. The cameras have an auto focus system and both cameras also measure the brightness of the object. Furthermore, the white balance of the scene is captured. In a panoramic image taking mode, a guide image is present on a preview screen to aid the photographer to compose the subsequent images to be included in the panoramic photo-taking operation.

In view of these references, it is an object of the present invention to provide a panorama photo-taking method and a mobile communication terminal for aligning scenes more easily and exactly when taking a panorama photo.

This object is solved by the subject matter of the independent claims.

Preferred embodiments are disclosed by the features of the dependent claims.

The above object and other aspects, features and embodiments of the present invention will be more apparent from the following detailed description taken in conjunction with the accompanying drawings, in which:
FIG. 1 is an exemplary view of an object to be photographed and photographing screens in panorama photo-taking;
FIG. 2 is a block diagram illustrating a wireless terminal to which embodiments of the present invention may be applied;
FIG. 3 is an exemplary view schematically illustrating a plane structure of a photographing environment in panorama photo-taking according to an embodiment of the present invention;
FIG. 4 is a flow diagram illustrating a panorama photo-taking operation according to one embodiment of the present invention; and
FIG. 5 is an exemplary view of a panoramic photo taken according to aspects of the present invention.

Hereinafter, embodiments according to the present invention will be described with reference to the accompanying drawings. In the following description, many particular items, such as detailed elements, are shown, but these are provided for helping the general understanding of the present invention, and it will be understood by those skilled in the art that these particular items can be modified without departing from the scope of the present invention as claimed.

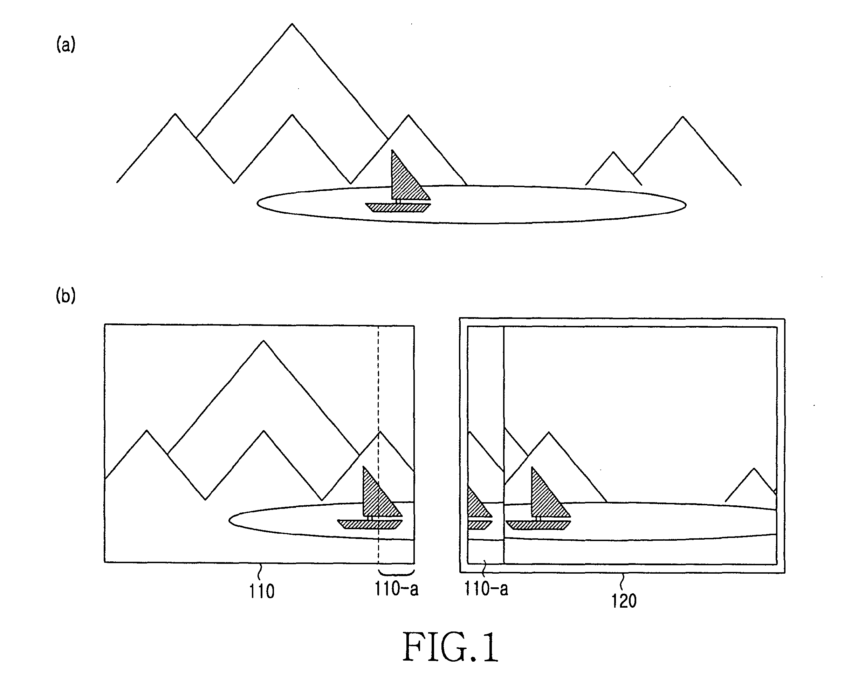

FIG. 1 is an exemplary view of an object to be photographed and photographing screens in panorama photo-taking. FIG. 1a illustrates an object to be photographed such as a landscape scene and FIG. 1b illustrates each photographing screen in panorama photo-taking for the landscape scene to be photographed. The photographing screens 110 and 120 illustrated in FIG. 1b may be a storage screen 110 of a first scene already photographed and a preview screen 120 of a second scene to be presently photographed. As illustrated in FIG. 1b, it can be understood that a part of a corresponding connection section of the storage screen 110 is displayed as a guide image 110-a in one side of the preview screen 120 connected to the storage screen 110. Accordingly, a user can properly adjust the photographing position of the preview screen 120 of the first scene with reference to the corresponding guide image 110-a.

It is noted that each scene has different photographing angles in such panorama photo-taking. Objects to be photographed in each scene are three-dimensional objects, but each scene on which these objects are photographed is a two-dimensional plane. In view of space, each scene is three-dimensionally photographed on different planes. Therefore, when a part of a previous scene is output on a current preview screen as a guide image, non-matching may occur, in which the corresponding guide image is not precisely matched with the image of the current preview screen. Such non-matching becomes more serious when an object is photographed at a relative short distance. In such a case, it is more difficult for a user to match the image of the current preview screen through a partial guide image of the previously photographed scene. To remedy this problem, in one embodiment of the present invention, when a guide image of the previously photographed scene is displayed on a preview screen of a scene being photographed, the corresponding guide image is warped and displayed on the photographing plane of the current preview screen. In this way, the warped image gives more precise visual help when adjusting the photographing position of the scene being photographed.

Meanwhile, in each scene photographing for panorama photo-taking, respective photographed scenes may have different color senses even when they are photographed in the same time period. This is because the intensity of radiation of an image input to each scene is different and thus difference occurs in photographing parameters such as white balance and exposure measured by an automatic camera system. On account of this, in another embodiment of the present invention, the photographing parameters (e.g. white balance and exposure) of respective scenes of a panoramic photo have the same value, so that the scenes can maximally have a similar color sense.

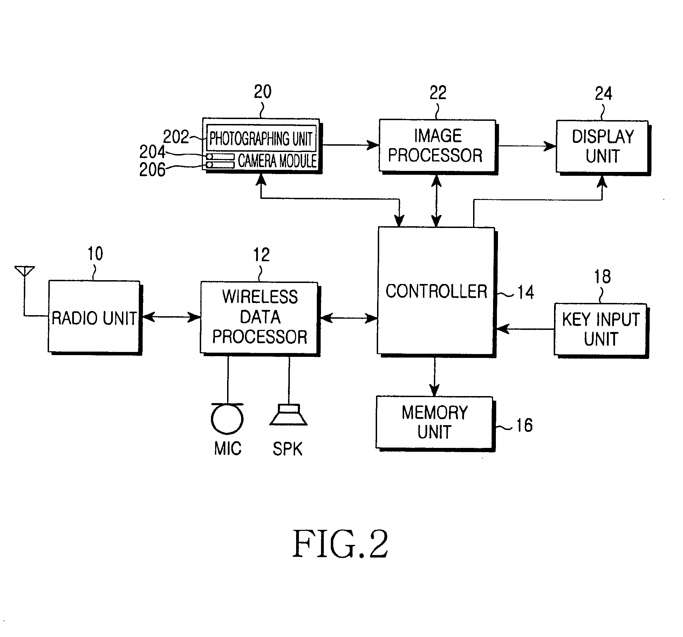

FIG. 2 is a block diagram illustrating a wireless terminal to which some embodiments of the present invention may be applied. In this example, a hardware-based device (e.g. a wireless terminal) will be described from among various apparatuses having a digital image photographing function. It is noted that various embodiments of the present invention may be more effective when applied to apparatuses (e.g. wireless terminals) that has a narrow angle of view and for which portability is more important than camera functionality as compared to a more advanced digital camera.

Referring to FIG. 2, the wireless terminal includes a camera module 20, an image processor 22, a display unit 24, a controller 14, a memory unit 16, a key input unit 18, a radio unit 10 and a wireless data processor 12.

The radio unit 10 modulates user's voice, character and control data into radio signals, transmits the radio signals to a base station (not shown) of a mobile communication network, receives radio signals from the base station, demodulates the radio signals into voice, character and control data, and outputs the voice, characters and control data. The wireless data processor 12 decodes the voice data received in the radio unit 10, outputs the decoded voice data through a speaker as audible sound, converts user' voice signals input from a microphone into data, output the data to the radio unit 10, and provides the controller 14 with the character and control data input through the radio unit 10, under the control of the controller 14.

The camera module 20 performs a general digital camera function under the control of the controller 14. The camera module 20 includes a photographing unit 202 with a CCD imaging device, etc., a lamination sensor 204 for lamination measurement, a distance sensor 206 for measuring a focal distance for an object, etc. The image processor 22 processes image data output to the camera module 20, and converts the image data into digital image data of a proper format.

The key input unit 18 is an element for receiving phone numbers or characters from a user, which has keys for inputting numeral and character information and function keys for setting various functions, and outputs input signals of the keys to the controller 14. The display unit 24 may include a display device such as a Liquid Crystal Display (LCD), and displays photographed digital image data as well as messages for various operation states of a corresponding terminal under the control of the controller 14.

The controller 14 controls the general operation of the mobile communication terminal by generally controlling the operations of the function units. In that regard, the controller 14 performs processing based on numbers and menu selection signals input through the key input unit 18, receives external photographing signals through the camera module 20 to perform corresponding processing, and controls both images photographed by the camera module 20 and image output signals necessary for various operations to be output through the display unit 24. If the situation requires, the controller 14 reads content stored in the memory unit 16, or stores the content in the memory unit 16. The memory unit 16 stores a plurality of programs and data related to the operations of the controller 14, and stores both information necessary for using the wireless terminal and camera photographing image information.

The wireless terminal having the construction as described above performs both camera functions and conventional mobile communication service-related operations. The controller 14 also performs a panorama photo-taking operation according to one or more embodiments of the present invention in addition to the afore-described functions. Moreover, the memory unit 16 stores operation programs and related information for the panorama photo-taking operation by the controller 14, and outputs the information to the controller 14 if the situation requires.

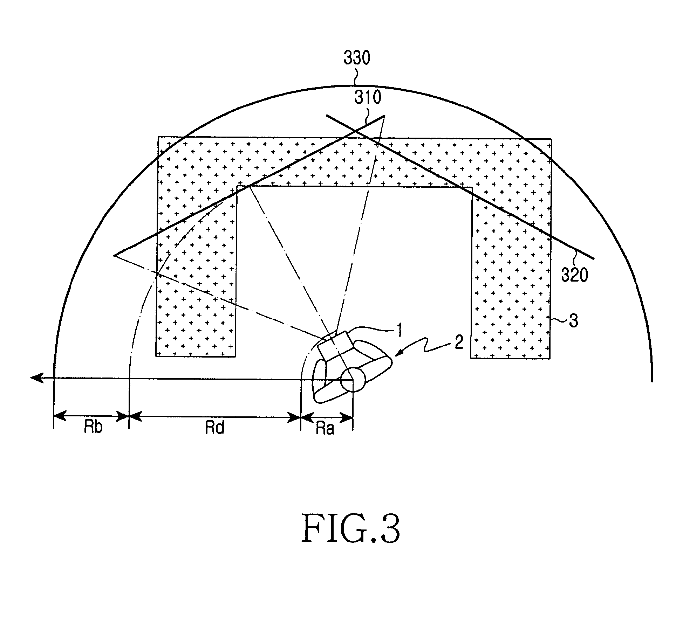

FIG. 3 is an exemplary view schematically illustrating a plane structure of a photographing environment in panorama photo-taking according to one embodiment of the present invention. For convenience of description, its shape or size is enlarged. FIG. 3 illustrates a state in which a user 2 takes a panoramic photo of an object such as a building 3 by using a digital photographing apparatus such as the wireless terminal 1. In this example, it is assumed that the panoramic photo includes two scenes.

As illustrated in FIG. 3, in the panorama photo-taking, respective scenes on which the building 3 is photographed are formed on two-dimensional planes, i.e. a first photographing plane 310 and a second photographing plane 320. The first photographing plane 310 and the second photographing plane 320 are spatially formed on different planes. When the part of a scene formed on the first photographing plane 310 is displayed on a preview screen as a guide image, non-matching may occur, in which the part of the scene formed on the first photographing plane 310 is not precisely matched with the image of a scene formed on the second photographing plane 320. In order to maximally reduce such non-matching, one embodiment of the present invention warps the guide image of the scene, which is formed on the first photographing plane 310, onto the second photographing plane 320 through proper image processing operations, and displays the warped guide image on the preview screen.

Further, the scenes photographed on the first photographing plane 310 and the second photographing plane 320 are warped onto the preset virtual same correspondent plane, e.g. a cylinder surface 330 in FIG. 3, and are interconnected so as to minimize non-matching of the connected parts. The virtual same correspondent plane may include a cylinder surface having a proper radius R with respect to the user 2, a spherical surface or a plane. The radius R may be determined by summing up a focal distance Rd, a preset distance Ra (e.g. 50 cm) between the wireless terminal 1 and the user 2, and a properly set extra value Rb (>=0 cm).

Through such image processing, a vertically aligned scene and a horizontally aligned scene as found in panorama photo-taking by means of a conventional tripod is achieved. This allows for a panoramic photo to be generated using metrically aligned scenes.

It is noted that an automatic camera system obtains slightly different images even when consecutively photographing the same scene. That is because the color tones of resultant images and planes on which images are formed change due to the influence of photographing parameters automatically found by the camera system. The automatic camera system measures various photographing parameters when photographing an object. Representative photographing parameters include a focal distance, exposure, white balance, etc. Such photographing parameters determine the planes on which images are formed and the color tones.

When a panoramic photo is photographed using the photographing scheme of the automatic camera system as described above, each scene can have a different color sense. Accordingly, some camera systems allow a user to set lighting information (incandescent electric lamp, fluorescent lamp, natural light), object information (landscape, person, close-up, hybrid), flash setup, etc., or uses a scheme for manually setting and fixing photographing parameters and photographing all scenes. However, in such a scheme, it is difficult to set precise white balance for an object to be actually photographed, and a user is inconvenienced when operating the system, and the user must be skilled in such operation. On account of this, other some camera systems use a scheme for applying photographing parameters, which have been automatically measured in the first photographing of a scene, when subsequent photographing is performed.

In another embodiment of the present invention, a precise white balance value is obtained by measuring the temperature of light by means of an illumination sensor, automatically measuring exposure and a focal distance for the central part of an object to be actually photographed, and the value of an object, which is to be photographed, in preview time, and applies them to scenes photographed in a panorama mode. Such a panorama photo-taking method is more precise in that it is possible to use photographing parameters measured in the central part of panorama resultant, as compared to conventional methods.

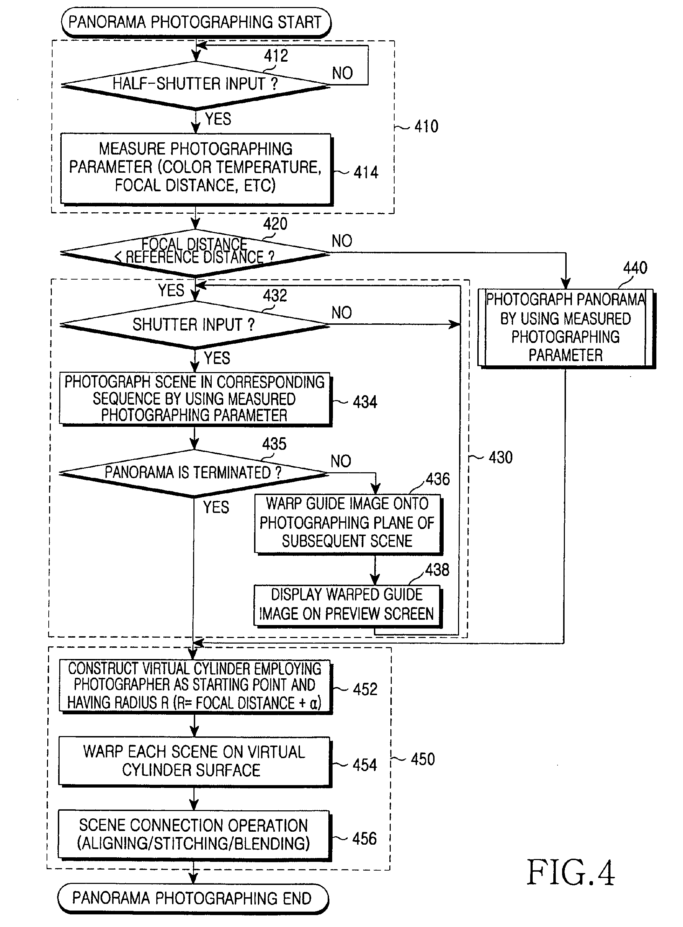

FIG. 4 is a flow diagram illustrating a panorama photo-taking operation according to one method of the present invention. The panorama photo-taking operation in the wireless terminal will be described in more detail with reference to FIG. 4. The panorama photo-taking operation may be configured to be performed when a panoramic photographing start item of the submenu of a camera photographing menu is selected from menu items for various function setup provided to the wireless terminal. Of course, both a construction and an operation program for displaying a corresponding menu item for such a menu selection operation and confirming key input of a key input unit from a user are prepared in advance to the wireless terminal.

Further, the configuration of each scene in panorama photo-taking may be set through another a prepared panorama environment setup menu in such a manner that a plurality of scenes are aligned in a row in a horizontal direction or a vertical direction. For such configuration of each scene, variously developed schemes can be applied.

Referring to FIG. 4, photographing parameters for an object to be photographed are measured in step 410. In step 420, whether a focal distance of the measured photographing parameters belongs to a preset reference distance is determined. When the focal distance belongs to the preset reference distance, step 430 is performed. Otherwise, step 440 is performed. The reference distance may be set as "infinite" employed when a focal distance is generally adjusted in a camera system.

In step 430, each panoramic scene is photographed using the measured photographing parameters. When a partial edge image of the previously photographed scene is displayed on the preview screen of a scene being photographed as a guide image, the corresponding guide image is warped onto the photographing plane of the current preview screen for display.

In step 440, each panoramic scene is photographed using the measured photographing parameters. According to the photographing method of each panoramic scene, a partial edge of the previously photographed scene is displayed on a current preview screen as a guide image without separate additional image processing, similarly to the prior art.

After steps 430 and 440, step 450 is performed. The photographed scenes are warped onto the preset virtual same correspondent plane, e.g. a cylinder surface, and are then interconnected.

In another embodiment of the present invention, it is possible to omit both step 420 for comparing the focal distance with the reference distance and step 440 for performing the panorama photo-taking by the conventional method. In the above description, the guide image is warped onto the photographing plane of a scene being photographed only in photographing within the relatively short distance (within the reference distance). This is for compensating for that non-matching which becomes more serious when an object is photographed at a relative short distance, wherein the non-matching means that the guide image is not precisely matched with the image of the current preview screen. In another embodiment of the present invention, it is also possible to perform an operation for always warping a guide image onto a current photographing plane regardless of a current distance from an object.

In further another embodiment of the present invention, step 410 for measuring the photographing parameters may be omitted in an extreme case. In such a case, in step 430, it is also possible to perform an operation for warping the guide image of a previous scene on a current photographing plane and displaying it onto a preview screen, regardless of photographing parameters (or use the conventional method in relation to photographing parameters).

Hereinafter, each step will be described in more detail with reference to FIG. 4. First, step 410 for measuring the photographing parameters may be divided into step 412 for determining if half-shutter input exists and step 414 for measuring the photographing parameters such as a focal distance, white balance (color temperature measured using an illumination sensor), exposure and zoom information when the half-shutter input exists in step 412. Through such steps, a user can measure photographing parameters, which are commonly applied to an entire scene for a panoramic photo, through the half-shutter input for the central part of an object to be photographed.

Next, step 430 may be divided into step 432 for determining if shutter input exists, step 434 for photographing a scene in a corresponding sequence by using the measured photographing parameters when the shutter input exists, step 435 for determining if the most recently photographed scene is the last scene from among scenes for a panoramic photo and determining whether to terminate panoramic scene photographing, step 436 for warping the guide image of the most recently photographed scene onto the photographing plane of a subsequent scene when it is not determined to terminate the panoramic scene photographing as a result of the determination in step 435, and step 438 for displaying the warped guide image on a preview screen. After step 438 is performed, the procedure returns to step 432 to wait for input of a shutter key for photographing of a subsequent scene and to repeat subsequent steps.

Step 450 for warping the photographed scenes onto the preset virtual same correspondent plane, e.g. a cylinder surface, may be divided into step 452 for constructing a virtual cylinder employing a photographer as a starting point and having a radius R (R= focal distance + α), step 454 for warping each scene onto the surface of the constructed virtual cylinder, and step 456 for performing image processing operations such as aligning, stitching and blending for the warped scenes such that overlapping areas are well matched, and interconnecting the warped scenes. If the connection operation for the scenes is completed, the scenes are stored in the memory unit as a single panoramic photo.

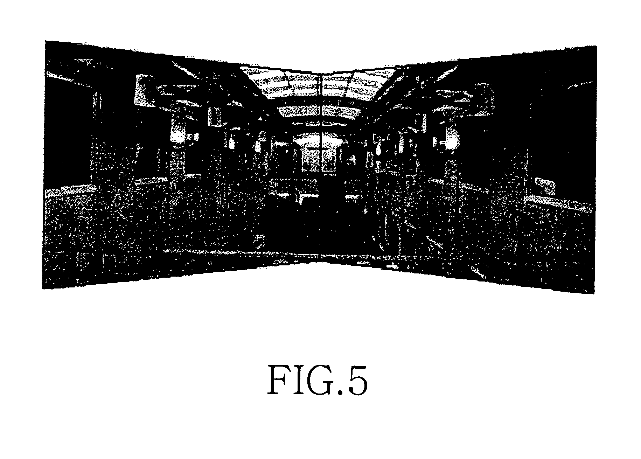

FIG. 5 illustrates a panoramic photo generated using this method.

The panoramic photo stored as described above may be transmitted to another wireless terminal through a Multimedia Messaging System (MMS) or by e-mail, and is transmitted to a Personal Computer (PC) to be used by a user.

According to panorama photo-taking methods described above, it is possible to align scenes more easily and precisely when the scenes are photographed, and to allow the scenes to have uniform color sense.

Although various embodiments of the present invention have been described for illustrative purposes, those skilled in the art will appreciate that various modifications, additions and substitutions are possible, without departing from the scope of the invention as disclosed in the accompanying claims.

## Claims

1. A method of taking a panoramic photo, the method comprising the steps of:
measuring (410) at least one photographing parameter for an object to be photographed;
determining (420) if a focal distance of the measured photographing parameter belongs to a preset reference distance; and
when the focal distance does not belong to the preset reference distance, displaying the partial edge image of the previously photographed scene on the preview screen as the guide image in the photographing of each scene, and photographing (440) the scenes constituting the panoramic photo by using the measured photographing parameter according to the user's operation,
**characterized in that**
when the focal distance belongs to the preset reference distance, warping (436) a partial edge image of a previously photographed scene onto a photographing plane of a scene being photographed as a guide image in photographing of each scene, displaying (438) the warped image on a preview screen, and photographing (434,435) a plurality of scenes constituting the panoramic photo by using the measured photographing parameter according to a user's operation.

2. The method as claimed in claim 1, wherein the step of photographing the scenes comprises the steps of:
determining (432) if shutter input exists;
photographing (434) a scene in a corresponding sequence by using the measured photographing parameter when the shutter input exists;
determining (435) if a most recently photographed scene is a last scene;
warping the guide image of the most recently photographed scene onto a photographing plane of a subsequent scene when the most recently photographed scene is not the last scene; and
displaying the warped guide image on the preview screen.

3. The method as claimed in claim 1 or 2, wherein the step of measuring the photographing parameters comprises the steps of:
determining (412) if half-shutter input exists; and
measuring (414) the photographing parameter including the focal distance and white balance when the half-shutter input exists.

4. The method as claimed in one of claims 1 to 3, further comprising a step of, if the photographing of the scenes constituting the panoramic photo is completed, warping the scenes onto a preset virtual same correspondent plane and interconnecting the warped scenes to be a single image.

5. The method as claimed in claim 4, wherein the step of interconnecting the warped scenes comprises the steps of:
constructing the virtual same correspondent plane which employs a precalculated user's position as a starting point, and has a radius including at least focal distance;
warping the scenes onto the virtual same correspondent plane; and
interconnecting the warped scenes through image processing including aligning, stitching and blending for overlapping areas.

6. A panorama photo-taking method for consecutively photographing a plurality of scenes constituting a panoramic photo, the method comprising the steps of:
determining (432) if shutter input exists;
photographing (434) a scene in a corresponding sequence when the shutter input exists;
determining (435) if a most recently photographed scene is a last scene;
warping (436) a guide image of the most recently photographed scene onto a photographing plane of a subsequent scene when the most recently photographed scene is not the last scene; and
displaying (438) the warped guide image on a preview screen,
wherein these steps are repeated until the most recently photographed scene becomes the last scene.

7. The method as claimed in claim 6, further comprising the steps of:
when the most recently photographed scene is the last scene, constructing the virtual same correspondent plane which employs a precalculated user's position as a starting point, and has a radius including at least focal distance;
warping the scenes onto the virtual same correspondent plane; and
interconnecting the warped scenes through image processing including aligning, stitching and blending for overlapping areas.

8. The method as claimed in claim 6 or 7, wherein the virtual same correspondent plane includes one of a cylinder surface, a plane and a spherical surface.

9. A mobile communication terminal comprising a camera module (20) with photographing unit (202) and a distance sensor (206), an image processor (22) for processing image data output from the camera module (20), a display unit (24), a controller (14), a key input unit (18), a radio unit (10), and a wireless data processor (12) adapted to carry out the steps of the method according to one of claims 1 to 8.

## Patentansprüche

1. Verfahren zum Aufnehmen eines Panoramafotos, wobei das Verfahren die folgenden Schritte umfasst:
Messen (410) wenigstens eines Fotografierparameters für ein zu fotografierendes Objekt;
Feststellen (420), ob eine Brennweite des gemessenen Fotografierparameters zu einer voreingestellten Bezugsweite gehört; und
wenn die Brennweite nicht zu der voreingestellten Bezugsweite gehört, Anzeigen des Teil-Randbildes der zuvor fotografierten Szene auf dem Vorschau-Bildschirm als das Leitbild beim Fotografieren jeder Szene und Fotografieren (440) der Szenen, die das Panoramafoto bilden, unter Verwendung des gemessenen Fotografierparameters entsprechend der Benutzerbetätigung,
**dadurch gekennzeichnet, dass**
wenn die Brennweite zu der voreingestellten Bezugsweite gehört, Durchführen von Warping (436) eines Teil-Randbildes einer zuvor fotografierten Szene auf eine Fotografierebene einer Szene, die fotografiert wird, als ein Leitbild beim Fotografieren jeder Szene,
Anzeigen (438) des Warping unterzogenen Bildes auf einem Vorschau-Bildschirm und Fotografieren (434, 435) einer Vielzahl von Szenen, die das Panoramafoto bilden, unter Verwendung des gemessenen Fotografierparameters entsprechend einer Benutzerbetätigung.

2. Verfahren nach Anspruch 1, wobei der Schritt des Fotografierens der Szenen die folgenden Schritte umfasst:
Feststellen (432), ob Verschluss-Eingabe vorliegt;
Fotografieren (434) einer Szene in einer entsprechenden Sequenz unter Verwendung des gemessenen Fotografierparameters, wenn die Verschluss-Eingabe vorliegt;
Feststellen (435), ob eine zuletzt fotografierte Szene eine letzte Szene ist;
Durchführen von Warping des Leitbildes der zuletzt fotografierten Szene auf eine Fotografierebene einer folgenden Szene, wenn die zuletzt fotografierte Szene nicht die letzte Szene ist; und
Anzeigen des Warping unterzogenen Leitbildes auf dem Vorschau-Bildschirm.

3. Verfahren nach Anspruch 1 oder 2, wobei der Schritt des Messens der Fotografierparameter die folgenden Schritte umfasst:
Feststellen (412), ob Halb-Verschluss-Eingabe vorliegt; und
Messen (414) des Fotografierparameters, der die Brennweite und Weißabgleich einschließt, wenn die Halb-Verschluss-Eingabe vorliegt.

4. Verfahren nach einem der Ansprüche 1 bis 3, das des Weiteren einen Schritt umfasst, in dem, wenn das Fotografieren der Szenen abgeschlossen ist, die das Panoramafoto bilden, Warping der Szenen auf eine voreingestellte virtuelle gleiche Entsprechungsebene durchgeführt wird und die Warping unterzogenen Szenen so miteinander verbunden werden, dass sie ein einzelnes Bild sind.

5. Verfahren nach Anspruch 4, wobei der Schritt, in dem die Warping unterzogenen Szenen miteinander verbunden werden, die folgenden Schritte umfasst:
Konstruieren der virtuellen gleichen Entsprechungsebene, wobei eine vorberechnete Benutzerposition als ein Ausgangspunkt verwendet wird, und die Ebene einen Radius hat,
der wenigstens die Brennweite einschließt;
Durchführen von Warping der Szenen auf die virtuelle gleiche Entsprechungsebene; und
Verbinden der Warping unterzogenen Szenen miteinander über Bildverarbeitung, die Ausrichten, Zusammenfügen und Blending für überlappende Bereiche einschließt.

6. Verfahren zum Aufnehmen von Panaromafotos, mit dem nacheinander eine Vielzahl von Szenen aufgenommen werden, die ein Panoramafoto bilden, wobei das Verfahren die folgenden Schritte umfasst:
Feststellen (432), ob Verschluss-Eingabe vorliegt;
Fotografieren (434) einer Szene in einer entsprechenden Sequenz unter Verwendung des gemessenen Fotografierparameters, wenn die Verschluss-Eingabe vorliegt;
Feststellen (435), ob eine zuletzt fotografierte Szene eine letzte Szene ist;
Durchführen von Warping des Leitbildes der zuletzt fotografierten Szene auf eine Fotografierebene einer folgenden Szene, wenn die zuletzt fotografierte Szene nicht die letzte Szene ist; und
Anzeigen des Warping unterzogenen Leitbildes auf dem Vorschau-Bildschirm.

7. Verfahren nach Anspruch 6, das des Weiteren die folgenden Schritte umfasst:
wenn die zuletzt fotografierte Szene die letzte Szene ist, Konstruieren der virtuellen gleichen Entsprechungsebene, wobei eine vorberechnete Benutzerposition als ein Ausgangspunkt verwendet wird, und die Ebene einen Radius hat, der wenigstens die Brennweite einschließt;
Durchführen von Warping der Szenen auf die virtuelle gleiche Entsprechungsebene; und
Verbinden der Warping unterzogenen Szenen miteinander über Bildverarbeitung, die Ausrichten, Zusammenfügen und Blending für überlappende Bereiche einschließt.

8. Verfahren nach Anspruch 6 oder 7, wobei die virtuelle gleiche Entsprechungsebene eine Zylinderfläche, eine ebene oder eine sphärische Fläche enthält.

9. Mobilkommunikations-Endgerät, das ein Kameramodul (20) mit einer Fotografiereinheit (202) und einem Entfernungssensor (206), eine Bildverarbeitungseinrichtung (22) zum Verarbeiten von dem Kameramodul (20) ausgegebener Bilddaten, eine Anzeigeeinheit (24), eine Steuereinrichtung (14), eine Tasteneingabeeinheit (18), eine Funkeinheit (10) und eine Drahtlos-Datenverarbeitungseinrichtung (12) umfasst, die zum Ausführen der Schritte des Verfahrens nach einem der Ansprüche 1 bis 8 eingerichtet sind.

## Revendications

1. Procédé pour prendre une photographie panoramique, le procédé comprenant les étapes consistant à :
mesurer (410) au moins un paramètre de photographie pour un objet à photographier ;
déterminer (420) si la distance focale du paramètre de photographie mesuré appartient à une distance de référence fixée à l'avance ; et
lorsque la distance focale n'appartient pas à la distance de référence fixée à l'avance, afficher sur l'écran de prévisualisation l'image partielle de bord de la scène photographiée précédemment comme image de guidage pour la photographie de chaque scène, et photographier (440) les scènes constituant la photographie panoramique en utilisant le paramètre de photographie mesuré en fonction de l'action de l'utilisateur,
**caractérisée par**
lorsque la distance focale appartient à la distance de référence fixée à l'avance, la déformation (436) d'une image partielle de bord d'une scène photographiée précédemment sur un plan de photographie d'une scène photographiée comme image de guidage pour la photographie de chaque scène, l'affichage (438) de l'image déformée sur un écran de prévisualisation et la photographie (434, 435) d'une pluralité de scènes constituant la photographie panoramique en utilisant le paramètre de photographie mesuré en fonction de l'action de l'utilisateur.

2. Procédé selon la revendication 1, dans lequel l'étape de photographie des scènes comprend les étapes consistant à :
déterminer (432) si une entrée de déclenchement existe ;
photographier (434) une scène dans une séquence correspondante en utilisant le paramètre de photographie mesuré lorsque l'entrée de déclenchement existe ;
déterminer (435) si la scène photographiée le plus récemment est la dernière scène ;
déformer l'image de guidage de la scène photographiée le plus récemment sur un plan de photographie d'une scène suivante lorsque la scène photographiée le plus récemment n'est pas la dernière scène ; et
afficher l'image de guidage déformée sur l'écran de prévisualisation.

3. Procédé selon la revendication 1 ou 2, dans lequel l'étape de mesure des paramètres de photographie comprend les étapes consistant à :
déterminer (412) si une entrée de pré-déclenchement existe ; et
mesurer (414) le paramètre de photographie incluant la distance focale et l'équilibre des blancs lorsque l'entrée de pré-déclenchement existe.

4. Procédé selon l'une des revendications 1 à 3, comprenant en outre une étape consistant à, si la photographie des scènes constituant la photographie panoramique est terminée, déformer les scènes sur un même plan virtuel correspondant fixé à l'avance et relier mutuellement les scènes déformées en une image unique.

5. Procédé selon la revendication 4, dans lequel l'étape de liaison mutuelle des scènes déformées comprend les étapes consistant à :
construire le même plan virtuel correspondant utilisant comme point de départ une position de l'utilisateur calculée à l'avance et ayant un rayon incluant au moins une distance focale ;
déformer les scènes sur le même plan virtuel correspondant ; et
relier mutuellement les scènes déformées par traitement d'image incluant un alignement, un assemblage et une fusion pour les zones superposées.

6. Procédé pour prendre une photographie panoramique pour photographier consécutivement une pluralité de scènes constituant une photographie panoramique, le procédé comprenant les étapes consistant à :
déterminer (432) si une entrée de déclenchement existe ;
photographier (434) une scène dans une séquence correspondante lorsque l'entrée de déclenchement existe ;
déterminer (435) si la scène photographiée le plus récemment est la dernière scène ;
déformer l'image de guidage de la scène photographiée le plus récemment sur un plan de photographie d'une scène suivante lorsque la scène photographiée le plus récemment n'est pas la dernière scène ; et
afficher (438) l'image de guidage déformée sur un écran de prévisualisation,
dans lequel ces étapes sont répétées jusqu'à ce que la scène photographiée le plus récemment devienne la dernière scène.

7. Procédé selon la revendication 6, comprenant en outre les étapes consistant à :
lorsque la scène photographiée le plus récemment est la dernière scène, construire le même plan virtuel correspondant en utilisant comme point de départ une position de l'utilisateur calculée à l'avance et ayant un rayon incluant au moins une distance focale ;
déformer les scènes sur le même plan virtuel correspondant ; et
relier mutuellement les scènes déformées par traitement d'image incluant un alignement, un assemblage et une fusion pour les zones superposées.

8. Procédé selon la revendication 6 ou 7, dans lequel le même plan virtuel correspondant comporte une surface parmi une surface cylindrique, une surface plane et une surface sphérique.

9. Terminal de communication mobile comprenant un module d'appareil photographique (20) avec une unité de photographie (202) et un capteur de distance (206), un processeur d'image (22) pour traiter les données d'image délivrées en sortie par le module d'appareil photographique (20), une unité d'affichage (24), un contrôleur (14), une unité d'entrée de touches (18), une unité radio (10) et un processeur de données sans fil (12) adapté à exécuter les étapes du procédé selon l'une quelconque des revendications 1 à 8.
